# EUROPEAN PATENT SPECIFICATION

(11) **EP 4 004 668 B1**
(45) Date of publication and mention of the grant of the patent: **26.07.2023**
(21) Application number: 19756114.5
(22) Date of filing: 31.07.2019
(51) Int. Cl.: G05D 1/02, G01S 17/87, G01S 17/89, G01S 17/931

(54) **A METHOD FOR FORMING A TRAVELLING PATH FOR A VEHICLE**
VERFAHREN ZUR ERSTELLUNG EINES FAHRWEGES FÜR EIN FAHRZEUG
PROCÉDÉ DE FORMATION D'UN TRAJET DE DÉPLACEMENT DESTINÉ À UN VÉHICULE

(43) Date of publication of application: 01.06.2022
(73) Proprietor: VOLVO TRUCK CORPORATION, 405 08 Göteborg (SE)
(72) Inventor: FORCOLIN, Fabio, 416 52 Göteborg (SE); ALDEBES, Kinan, 414 62 Göteborg (SE)
(74) Representative: Kransell & Wennborg KB
(86) International application number: PCT/EP2019/070691
(87) International publication number: WO 2021/018396

(56) References cited:
- WO-A1-2017/063018
- US-A1- 2017 109 888

## Description

### TECHNICAL FIELD

The present disclosure relates to a computer implemented method for operating a control system to form a travelling path for a vehicle, where the path determination is based on data generated by a pair of sensors producing three-dimensional (3D) point clouds, where the 3D point clouds respectively provides a representation of a left and a right-hand side of the vehicle. The present disclosure also relates to the corresponding control system and to a computer program product.

### BACKGROUND

Recently there have been great advances in the semi or fully autonomous operation of a vehicle, effectively providing driver assistance and safety functions, such as adaptive cruise control, pedestrian detection, front and rear collision warning, lane departure warning and general obstacle detection. Such an autonomous vehicle typically makes use of a plurality of sensors that are configured to detect information about an environment surrounding the vehicle. The sensor may for example implement camera vision and radar or LiDAR technologies, possibly fusing the outputs form the sensor for forming an understanding of the vehicle environment.

An example of such a vehicle is presented in US20140379247, where the vehicle and its associated control system use information provided from the sensors to navigate through the environment. For example, if the sensor(s) detect that the vehicle is approaching an obstacle, the control system adjusts the directional controls of the vehicle to cause the vehicle to navigate around the obstacle.

Specifically, the control system according to US20140379247 makes use of a navigation/pathing system as well as an obstacle avoidance system for safe navigation of the vehicle within the detected environment surrounding the vehicle, by controlling the speed and direction of the vehicle. Typically, both the navigation/pathing system and the obstacle avoidance system apply a generalized object and feature detection process for navigation and obstacle avoidance, making the operation of the vehicle overall reliable. However, due to the generalized object and feature detection process approach presented by US20140379247, the implementation will typically be computational inefficient and thus slow. Accordingly, it would be desirable to provide further enhancements for improving the path calculation for an autonomous vehicle, specifically targeted towards computational efficiency suitable for an in-vehicle implementation, possibly also allowing for improved robustness of the vehicle operation. WO 2017/063018 A1 discloses a mobile machine for operating in an underground mine comprising a body, a power source, a cabin and traction devices. The mobile machine also comprises an on-board ranging device configured for radio frequency communication with at least one off-board ranging device located in the underground mine to enable determination of position data for the machine. The mobile machine also comprises a pair of Lidar sensors placed on the side of the vehicle facing the wall of the tunnel.

### SUMMARY

According to an aspect of the present disclosure, the above is at least partly alleviated by a computer implemented method for operating a control system to form a travelling path for a vehicle, the control system comprising an electronic control unit (ECU) and a first and a second side facing sensor arranged at the vehicle, the first and a second sensor having a non-overlapping field of view, the ECU arranged in communication with the first and a second sensor, wherein the method comprises the steps of receiving, at the ECU, a first sequence of data from the first sensor and a corresponding second sequence of data from the second sensor, wherein the first and the second sequence of data from the sensors is arranged as three-dimensional (3D) point clouds respectively providing a representation of a left and a right-hand side of the vehicle, correlating, by the ECU, the first and the second sequence of data to form a third sequence of data, the third sequence of data providing a 3D representation of an area between first and the second sensor, selecting, by the ECU, a portion of the third sequence of data representing a traversable area for the vehicle, and forming, by the ECU, the travelling path for the vehicle based on the selected portion of the third sequence of data.

The present disclosure is based upon the realization that it is possible to automatically form a travelling path for a vehicle, even in situations where the data in relation to a forward-facing direction of the vehicle is lacking. Such a situation may for example be manifested by an implementation where no sensor data is available in the forward-facing direction how the vehicle is operated. This in in accordance to the present disclosure achieved by taking into account data from a first and a second sensor being "side mounted" at the vehicle, where the side mounted sensors have a non-overlapping field of view. Specifically, in line with the present disclosure the side mounted sensors are configured to each generate corresponding sequences of data, where the sequences of data from the sensors are provided as 3D point clouds respectively providing a representation of the left and the right-hand side of the vehicle.

The 3D point clouds from the respective sensors are subsequently correlated to form a third sequence of data, the third sequence of data providing a 3D representation of an area between first and the second sensor. Since the 3D point clouds from the respective sensors essentially will relate to objects, such as a wall, a road separator, obstacles, etc. This fact in combination that the sensors are side mounted, i.e. each monitoring an area "away" from the vehicles at the left and right-hand side of the vehicle, makes it possible to identify (in the correlation step) a traversable area for the vehicle. Of course, no information is available in relation what is in front of the vehicles, but as long as the vehicles is able to travel forward this may be seen as an indicator that the area in front of the vehicle in fact is traversable.

Accordingly, if making use of an example where the vehicle is travelling in an enclosed space, such as a road within a mine, then the side mounted sensors will essentially collect information relating to the walls of the mine. By correlating the sensor data, where the sensor data preferably is stored sequentially (chronologically), the mentioned traversable area may be formed. Advantageously, the step of correlating the sensor data comprises comparing a distance between the corresponding data points in the first and the second sequence of data

Thus, in a preferred embodiment of the present disclosure the step of correlating the first and the second sequence of data may also comprise performing a pair wise correlation between data points in the respective sequence of data. Preferably, the traversable area is a surface area, advantageously coinciding with a ground level.

In accordance to the present disclosure, a portion of the third sequence of data is selected. In relation to the above example, e.g. areas close to the respective walls of the mine (or road, obstacles, etc.) may be removed. For example, it may be desirable to not include an area just next to a wall as being absolutely traversable, since e.g. portions of the vehicle potentially could collide with the wall if being to close to the wall. This step may also been seen as a filtering step, where a portion of noise comprised with the 3D point clouds may be filtered out.

Once a portion of the third sequence of data has been selected, it may be possible to use any means for converting the selected portion of the third sequence of data to be a representation of a path that preferably should be selected for travelling of the vehicle. For example, if considering the selected portion of the third sequence of data to be a volume, the travelling path may be seen as a "thinned out" version of the selected portion of the third sequence of data.

In some embodiments of the present disclosure step of forming the travelling path comprises applying an octree processing scheme to the selected portion of the third sequence of data. Such a scheme may also comprise transforming an output from the octree processing scheme for forming a graph, the graph being a representation of the third sequence of data. It may also be advantageous to apply weights to the graph, where data points of the graph arranged closed to an edge of the traversable area is giving a higher weight as compared to data points in a center of the traversable area. Such an implementation may typically provide an improved robustness of the travelling path formation.

Preferably, the sensors for forming the point clouds providing a representation of the surrounding of the vehicle may for example include laser scanner arrangements, radar arrangements, ultrasound arrangements and/or a camera arrangement. Further sensors are of course possible and within the scope of the present disclosure. All of the listed sensor arrangements may allow for the formation of a topology/structure of the area/environment surrounding the vehicle.

In a preferred embodiment the first and a second sensor is a light detection and ranging (LiDAR) sensor. LiDAR sensors calculate the distance between the vehicle and the surrounding surface by emitting a number of lasers. The launch angle of the laser and the distance data are converted into the mentioned three-dimensional (3D) point clouds. The number of points acquired ranges from thousands to hundreds of thousands. Additionally, a scan center for the first and the second sensor is perpendicular to a normal operational direction for the vehicle. As such, the LiDAR sensors are preferably (but not necessarily) arranged to be completely side facing in comparison to a normal operational direction of the vehicle.

In a possible embodiment of the present disclosure, all of the processing must not necessarily be performed onboard the vehicle. Rather, in one possible embodiment of the present disclosure the ECU comprises a first and a second processing portion, the first processing portion is arranged on-board the vehicle and the second processing portion is comprised with a remote server arranged off-board the vehicle, and the method further comprising the step of transmitting the first and the second sequence of data from the vehicle to a remote server, where the steps of correlating, selecting and forming are at least partly performed by the second processing portion.

Accordingly, there is a necessity to collect the sensor data using the sensors arranged on the left and right-hand side of the vehicle, respectively. However, it is then possible but not necessary to form the travelling path onboard the vehicle. Rather, such steps may in some embodiments be allowed to be performed offboard the vehicle, e.g. at a remote server.

According to another aspect of the present disclosure there is provided a control system adapted to form a travelling path for a vehicle, the control system comprising an electronic control unit (ECU) and a first and a second side facing sensor arranged at the vehicle, the first and a second sensor having a non-overlapping field of view, the ECU arranged in communication with the first and a second sensor, wherein the ECU is adapted to receive a first sequence of data from the first sensor and a corresponding second sequence of data from the second sensor, wherein the first and the second sequence of data from the sensors is arranged as three-dimensional (3D) point clouds respectively providing a representation of a left and a right-hand side of the vehicle, correlate the first and the second sequence of data to form a third sequence of data, the third sequence of data providing a 3D representation of an area between first and the second sensor, select a portion of the third sequence of data representing a traversable area for the vehicle, and form the travelling path for the vehicle based on the selected portion of the third sequence of data. This aspect of the present disclosure provides similar advantages as discussed above in relation to the previous aspect of the present disclosure.

In a preferred embodiment of the present disclosure the control system is arranged as a component of the vehicle, where the vehicle advantageously is operated based on the formed travelling path. The vehicle may e.g. be any form of construction equipment, such as e.g. a wheel loader, or any form of "regular" vehicles such as one of a bus, a truck, a car. The vehicle may furthermore be at least one of a pure electrical vehicle (PEV) and a hybrid electric vehicle (HEV). Furthermore, the vehicle may in some embodiments be an autonomously operated vehicle, such as a semi or fully autonomously operated vehicle.

According to a further aspect of the present disclosure there is provided a computer program product comprising a non-transitory computer readable medium having stored thereon computer program means for operating a control system adapted to form a travelling path for a vehicle, the control system comprising an electronic control unit (ECU) and a first and a second side facing sensor arranged at the vehicle, the first and a second sensor having a non-overlapping field of view, the ECU arranged in communication with the first and a second sensor, wherein the computer program product comprises code for receiving, at the ECU, a first sequence of data from the first sensor and a corresponding second sequence of data from the second sensor, wherein the first and the second sequence of data from the sensors is arranged as three-dimensional (3D) point clouds respectively providing a representation of a left and a right hand side of the vehicle, code for correlating, by the ECU, the first and the second sequence of data to form a third sequence of data, the third sequence of data providing a 3D representation of an area between first and the second sensor, code for selecting, by the ECU, a portion of the third sequence of data representing a traversable area for the vehicle, and code for forming, by the ECU, a travelling path for the vehicle based on the selected portion of the third sequence of data. Also this aspect of the present disclosure provides similar advantages as discussed above in relation to the previous aspects of the present disclosure.

The computer readable medium may be any type of memory device, including one of a removable nonvolatile random access memory, a hard disk drive, a floppy disk, a CD-ROM, a DVD-ROM, a USB memory, an SD memory card, or a similar computer readable medium known in the art.

Further advantages and advantageous features of the present disclosure are disclosed in the following description and in the dependent claims.

### BRIEF DESCRIPTION OF THE DRAWINGS

With reference to the appended drawings, below follows a more detailed description of embodiments of the present disclosure cited as examples.

In the drawings:
Figs. 1A illustrates a wheel loader and 1B a truck in which the navigation path determination system according to the present disclosure may be incorporated;
Fig. 2 illustrates a conceptual control system in accordance to a currently preferred embodiment of the present disclosure;
Figs. 3A - 3C exemplifies conversion from point clouds to a travelling path for the vehicle; and
Fig. 4 illustrates the processing steps for performing the method according to the present disclosure.

### DETAILED DESCRIPTION OF EXAMPLE EMBODIMENTS OF THE INVENTION

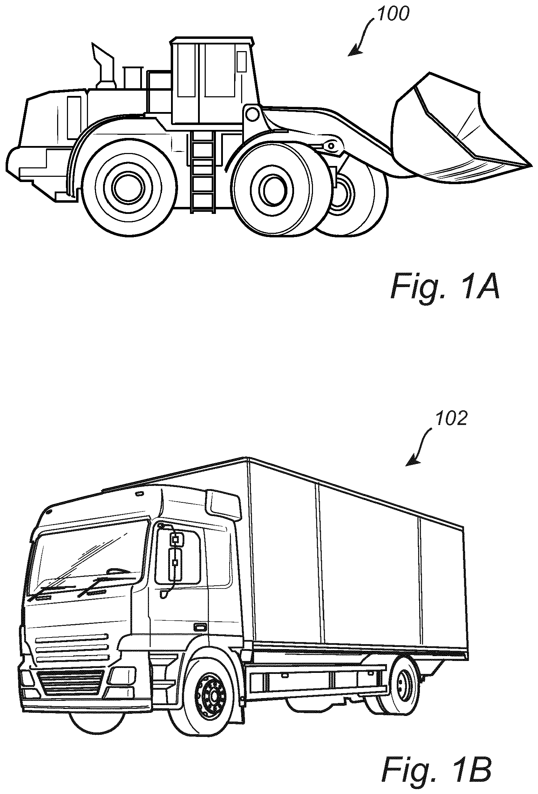

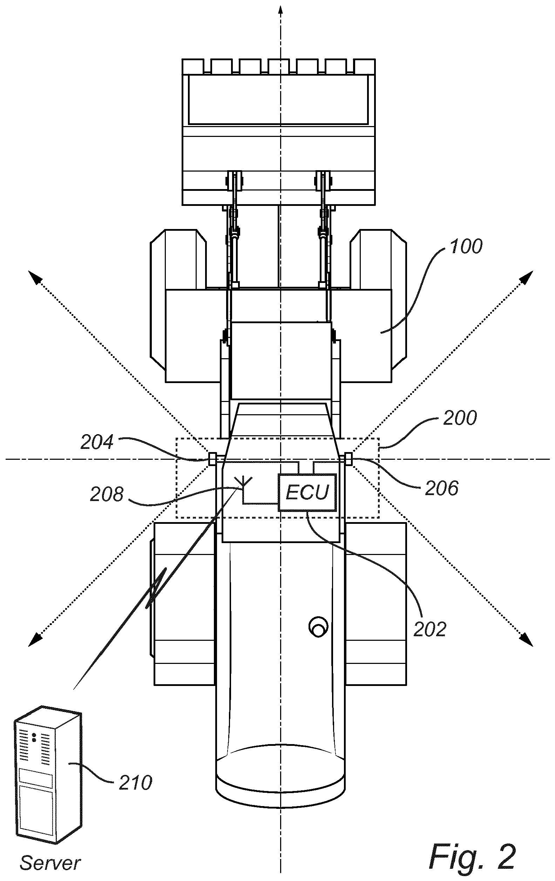

Referring now to the drawings and to Fig. 1A in particular, there is depicted an exemplary vehicle, here illustrated as a wheel loader 100, in which a control system 200 (as shown in Fig. 2) according to the present disclosure may be incorporated. The control system 200 may of course be implemented, possibly in a slightly different way, in a truck 102 as shown in Fig. 1B, a car, a bus, etc. The vehicle may for example be one of an electric or hybrid vehicle, or possibly a gas, gasoline or diesel vehicle. The vehicle comprises an electric machine (in case of being an electric or hybrid vehicle) or an engine (such as an internal combustion engine in case of being a gas, gasoline or diesel vehicle).

Fig. 2 shows a conceptual and exemplary implementation of the control system 200 according to the present disclosure, presented in a non-limiting manner, to e.g. be implemented in the vehicle 100. Other ways of implementing the control system 200 is possible and within the scope of the present disclosure.

As is shown, the control system 200 comprises an electronic control unit (ECU) 202 arranged in communication with a first 204 and a second 206 LiDAR sensor, where the sensors 204, 206 are arranged on the sides of the vehicle 100 (left and right-hand side) and having a non-overlapping field of view.

The ECU 202 may for example be manifested as a general-purpose processor, an application specific processor, a circuit containing processing components, a group of distributed processing components, a group of distributed computers configured for processing, a field programmable gate array (FPGA), etc. The processor may be or include any number of hardware components for conducting data or signal processing or for executing computer code stored in memory. The memory may be one or more devices for storing data and/or computer code for completing or facilitating the various methods described in the present description. The memory may include volatile memory or nonvolatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection and includes computer code for executing one or more processes described herein.

The control system 200 may further comprise a transceiver 208, allowing the control system 200 wirelessly communicate with a remote server 210, not forming part of the control system 200. For reference, the transceiver 208 may be arranged to allow for any form of wireless connections like WLAN, CDMA, GSM, GPRS, 3G mobile communications, 3/4/5G mobile communications, or similar. Other present of future wireless communication protocols are possible and within the scope of the present disclosure, such as any form of Vehicle-to-everything (V2X) communication protocols.

Furthermore, the control system 200 may be arranged in communication with one or a plurality of sensors (also not shown) for collecting data relating to the operation of the vehicle 100. Such sensors may for example be configured to collect data relating to a speed of the vehicle 100, an inclination at which the vehicle 100 is currently operate, a sensor for measuring a tire pressure, etc.

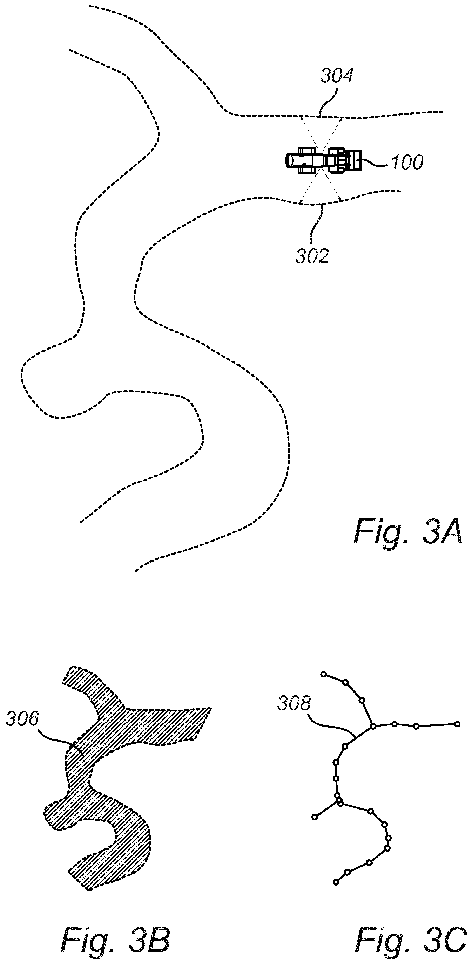

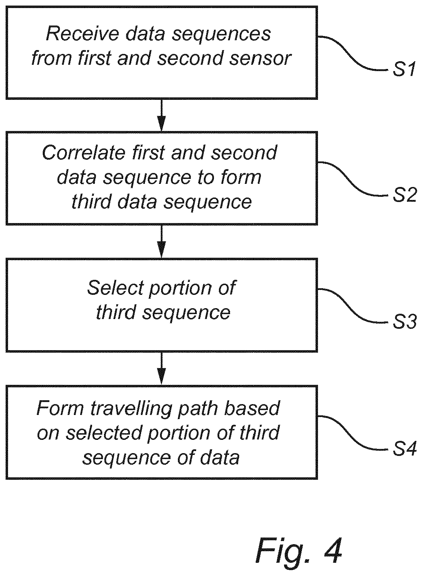

During operation, with further reference to Figs. 3A - 3C and 4, the process starts by receiving, S1, at the ECU 202, a first sequence of data from the first sensor 204 and a corresponding second sequence of data from the second sensor 206, wherein the first and the second sequence of data from the sensors 204, 206 is arranged as three-dimensional (3D) point clouds respectively providing a representation of a left (L) side wall 304 and a right (R) side wall 302 in relation to an operational direction for the vehicle 100.

Thus, in case e.g. the vehicle 100 is travelling in an enclosed space, such as a road within a mine, then the side mounted sensors 204, 206 will essentially chronologically collect information relating to the walls 302, 304 of the mine, such as is specifically shown in Fig. 3A.

Once the information from the sensors 204, 206 has been collected, the chronological information is correlate, S2, by the ECU 202 to form a third sequence of data, the third sequence of data providing a 3D representation of an area between first and the second sensor (204, 206). The correlation is preferably performed by activating a pair wise correlation between data points in the respective sequence of data from the sensors 304, 206. Possibly, the comparison may be seen as determining a distance across the road onto where the vehicle 100 is travelling, such as a distance between the walls 304, 306 of the mine. It may as such be useful to know an internal distance between the sensors 204, 206 when mounted at the vehicle 100. The overall distance between the walls 304, 306 may thus be seen as a sum of the distance measured by the first sensor 206 to the wall 302, plus the distance measured by the second sensor 204 to the wall 304, plus the internal distance between the sensors 204, 206.

Furthermore, a portion of the data in the third sequence of data is subsequently selected, S3, by the ECU 202. This selected portion of the third sequence of data represents a traversable area 306 for the vehicle (100, 102) such as is illustrated in Fig. 3B.

Based on the traversable area 306, it is possible to form S4, by the ECU 202, a travelling path 308, such as shown in Fig. 3C, for the vehicle 100 based on the selected portion of the third sequence of data. The travelling path 306 may for example, in a general case, be seen as a "center" of the traversable area 306. However, to increase the robustness of the scheme it may be possible to apply an octree processing scheme to the selected portion of the third sequence of data. Such a scheme may also comprise transforming an output from the octree processing scheme for forming a graph, the graph being a representation of the third sequence of data. It may also be advantageous to apply weights to the graph, where data points of the graph arranged closed to an edge of the traversable area is giving a higher weight as compared to data points in a center of the traversable area.

The present disclosure contemplates methods, devices and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor.

By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless to a machine, the machine properly views the connection as a machine-readable medium. Thus, any such connection is properly termed a machine-readable medium. Combinations of the above are also included within the scope of machine-readable media. Machine-executable instructions include, for example, instructions and data that cause a general-purpose computer, special purpose computer, or special purpose processing machines to perform a certain function or group of functions.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps.

## Claims

1. A computer implemented method for operating a control system (200) to form a travelling path (308) for a vehicle (100, 102), the control system (200) comprising an electronic control unit (ECU)(202) and a first (204) and a second (206) side facing sensor arranged at the vehicle (100), the first and a second sensor (204, 206) having a non-overlapping field of view (208, 210), the ECU (202) arranged in communication with the first and a second sensor (204, 206), wherein the method comprises the steps of:
- receiving (S1), at the ECU (202), a first sequence of data from the first sensor (204) and a corresponding second sequence of data from the second sensor (206), wherein the first and the second sequence of data from the sensors (204, 206) is arranged as three-dimensional (3D) point clouds respectively providing a representation of a left (L) and a right (R) hand side of the vehicle (100, 102), the method **characterized in that** it further comprises the steps of:
- correlating (S2), by the ECU (202), the first and the second sequence of data to form a third sequence of data, the third sequence of data providing a 3D representation of an area between first and the second sensor (204, 206),
- selecting (S3), by the ECU (202), a portion of the third sequence of data representing a traversable area (306) for the vehicle (100, 102), and
- forming (S4), by the ECU (202), the travelling path (308) for the vehicle (100, 102) based on the selected portion of the third sequence of data.

2. The computer implemented method according to claim 1, wherein the first and a second sensor is a LiDAR sensor.

3. The computer implemented method according to any one of claims 1 and 2, wherein a scan center for the first and the second sensor is perpendicular to a normal operational direction for the vehicle.

4. The computer implemented method according to any one of the preceding claims, wherein the step of correlating the first and the second sequence of data comprising performing a pair wise correlation between data points in the respective sequence of data.

5. The computer implemented method according to any one of the preceding claims, further comprising the step of:
- filtering, by the ECU, the third sequence of data for removing edge data points.

6. The computer implemented method according to any one of the preceding claims, wherein the first and the second sequence of data represent at least walls of a mine where the vehicle is travelling.

7. The computer implemented method according to any one of the preceding claims, wherein the traversable area is a surface area.

8. The computer implemented method according to claim 7, wherein the surface area coincides with a ground level.

9. The computer implemented method according to any one of the preceding claims, wherein the step of correlating the first and the second sequence of data comprises comparing a distance between the corresponding data points in the first and the second sequence of data.

10. The computer implemented method according to any one of the preceding claims, further comprising the step of:
- operating the vehicle based on the formed travelling path.

11. The computer implemented method according to any one of the preceding claims, wherein the ECU comprises a first and a second processing portion, the first processing portion is arranged on-board the vehicle and the second processing portion is comprised with a remote server arranged off-board the vehicle, and the method further comprising the step of:
- transmitting the first and the second sequence of data from the vehicle to a remote server,
wherein the steps of correlating, selecting and forming are at least partly performed by the second processing portion.

12. A control system adapted to form a travelling path for a vehicle, the control system comprising an electronic control unit (ECU) and a first and a second side facing sensor arranged at the vehicle, the first and a second sensor having a non-overlapping field of view, the ECU arranged in communication with the first and a second sensor, wherein the ECU is adapted to:
- receive a first sequence of data from the first sensor and a corresponding second sequence of data from the second sensor, wherein the first and the second sequence of data from the sensors is arranged as three-dimensional (3D) point clouds respectively providing a representation of a left and a right-hand side of the vehicle, the control system **characterized in that** the ECU is adapted to further:
- correlate the first and the second sequence of data to form a third sequence of data, the third sequence of data providing a 3D representation of an area between first and the second sensor,
- select a portion of the third sequence of data representing a traversable area for the vehicle, and
- form the travelling path for the vehicle based on the selected portion of the third sequence of data.

13. The control system according to claim 12 wherein the first and a second sensor is a LiDAR sensor.

14. The control system according to any one of claims 12 - 13, wherein the ECU comprises a first and a second processing portion, the first processing portion is arranged on-board the vehicle and the second processing portion is comprised with a remote server arranged off-board the vehicle, wherein correlate, select and form are at least partly performed by the second processing portion.

15. A vehicle, comprising a control system according to any one of claims 12-14

16. A computer program product comprising a non-transitory computer readable medium having stored thereon computer program means for operating a control system adapted to form a travelling path for a vehicle, the control system comprising an electronic control unit (ECU) and a first and a second side facing sensor arranged at the vehicle, the first and a second sensor having a non-overlapping field of view, the ECU arranged in communication with the first and a second sensor, wherein the computer program product comprises:
- code for receiving, at the ECU, a first sequence of data from the first sensor and a corresponding second sequence of data from the second sensor, wherein the first and the second sequence of data from the sensors is arranged as three-dimensional (3D) point clouds respectively providing a representation of a left and a right hand side of the vehicle, the computer program product being **characterized in that** it further comprises:
- code for correlating, by the ECU, the first and the second sequence of data to form a third sequence of data, the third sequence of data providing a 3D representation of an area between first and the second sensor,
- code for selecting, by the ECU, a portion of the third sequence of data representing a traversable area for the vehicle, and
- code for forming, by the ECU, a travelling path for the vehicle based on the selected portion of the third sequence of data.

## Patentansprüche

1. Computerimplementiertes Verfahren zum Betreiben eines Steuerungssystems (200) zur Erstellung eines Fahrweges (308) für ein Fahrzeug (100, 102), das Steuerungssystem (200) umfassend eine elektronische Steuereinheit (ECU) (202) und einen ersten (204) und einen zweiten (206) seitlich zugewandten Sensor, die an dem Fahrzeug (100) angeordnet sind, wobei der erste und der zweite Sensor (204, 206) ein nicht überlappendes Sichtfeld (208, 210) aufweisen, wobei die ECU (202) in Kommunikation mit dem ersten und dem zweiten Sensor (204, 206) angeordnet ist, wobei das Verfahren die folgenden Schritte umfasst:
- Empfangen (S1), an der ECU (202), einer ersten Datensequenz von dem ersten Sensor (204) und einer entsprechenden zweiten Datensequenz von dem zweiten Sensor (206), wobei die erste und die zweite Datensequenz von den Sensoren (204, 206) als dreidimensionale (3D) Punktwolken angeordnet sind, die jeweils eine Darstellung einer linken (L) und einer rechten (R) Seite des Fahrzeugs (100, 102) bereitstellen, wobei das Verfahren **dadurch gekennzeichnet ist, dass** es ferner die folgenden Schritte umfasst:
- Korrelieren (S2) der ersten und der zweiten Datensequenz durch die ECU (202), um eine dritte Datensequenz zu erstellen, wobei die dritte Datensequenz eine 3D-Darstellung eines Bereichs zwischen dem ersten und dem zweiten Sensor (204, 206) liefert,
- Auswählen (S3) eines Abschnitts der dritten Datensequenz durch die ECU (202), die einen durchfahrbaren Bereich (306) für das Fahrzeug (100, 102) darstellt, und
- Erstellen (S4) des Fahrweges (308) für das Fahrzeug (100, 102) durch die ECU (202) auf der Grundlage des ausgewählten Abschnitts der dritten Datensequenz.

2. Computerimplementiertes Verfahren nach Anspruch 1, wobei der erste und zweite Sensor ein LiDAR-Sensor ist.

3. Computerimplementiertes Verfahren nach einem der Ansprüche 1 und 2, wobei ein Scan-Zentrum für für den ersten und den zweiten Sensor senkrecht zu einer normalen Betriebsrichtung des Fahrzeugs liegt.

4. Computerimplementiertes Verfahren nach einem der vorhergehenden Ansprüche, wobei der Schritt des Korrelierens der ersten und der zweiten Datensequenz die Durchführung einer paarweisen Korrelation zwischen Datenpunkten in der jeweiligen Datensequenz umfasst.

5. Computerimplementiertes Verfahren nach einem der vorhergehenden Ansprüche, das ferner den folgenden Schritt umfasst:
- Filtern der dritten Datensequenz durch die ECU zur Entfernung von Randdatenpunkten.

6. Computerimplementiertes Verfahren nach einem der vorhergehenden Ansprüche, wobei die erste und die zweite Datensequenz mindestens Wände einer Mine darstellen, in der das Fahrzeug fährt.

7. Computerimplementiertes Verfahren nach einem der vorhergehenden Ansprüche, wobei der durchfahrbare Bereich ein Oberflächenbereich ist.

8. Computerimplementiertes Verfahren nach Anspruch 7, wobei der Oberflächenbereich mit der Bodenhöhe übereinstimmt.

9. Computerimplementiertes Verfahren nach einem der vorhergehenden Ansprüche, wobei der Schritt des Korrelierens der ersten und der zweiten Datensequenz Vergleichen eines Abstands zwischen den entsprechenden Datenpunkten in der ersten und der zweiten Datensequenz umfasst.

10. Computerimplementiertes Verfahren nach einem der vorhergehenden Ansprüche, das ferner den folgenden Schritt umfasst:
- Betreiben des Fahrzeugs auf der Grundlage des erstellten Fahrweges.

11. Computerimplementiertes Verfahren nach einem der vorhergehenden Ansprüche, wobei die ECU einen ersten und einen zweiten Verarbeitungsabschnitt umfasst, wobei der erste Verarbeitungsabschnitt an Bord des Fahrzeugs angeordnet ist und der zweite Verarbeitungsabschnitt in einem außerhalb des Fahrzeugs angeordneten Remote-Server enthalten ist, und wobei das Verfahren ferner den folgenden Schritt umfasst:
- Übertragen der ersten und zweiten Datensequenz vom Fahrzeug an einen Remote-Server,
wobei die Schritte des Korrelierens, Auswählens und Erstellens mindestens teilweise durch den zweiten Verarbeitungsabschnitt durchgeführt werden.

12. Steuerungssystem, das angepasst ist zur Erstellung eines Fahrweges für ein Fahrzeug, wobei das Steuerungssystem eine elektronische Steuereinheit (ECU) und einen ersten und einen zweiten seitlich zugewandten Sensor umfasst, die an dem Fahrzeug angeordnet sind, wobei der erste und der zweite Sensor ein nicht überlappendes Sichtfeld haben, wobei die ECU in Kommunikation mit dem ersten und dem zweiten Sensor angeordnet ist, wobei die ECU angepasst ist, zum:
- Empfangen einer ersten Datensequenz von dem ersten Sensor und einer entsprechenden zweiten Datensequenz von dem zweiten Sensor, wobei die erste und die zweite Datensequenz von den Sensoren als dreidimensionale (3D) Punktwolken angeordnet sind, die jeweils eine Darstellung einer linken und einer rechten Seite des Fahrzeugs bereitstellen, wobei das Steuerungssystem **dadurch gekennzeichnet ist, dass** die ECU ferner angepasst ist, zum:
- Korrelieren der ersten und der zweiten Datensequenz, um eine dritte Datensequenz zu erstellen, wobei die dritte Datensequenz eine 3D-Darstellung eines Bereichs zwischen dem ersten und dem zweiten Sensor liefert,
- Auswählen eines Abschnitts der dritten Datensequenz, die einen durchfahrbaren Bereich für das Fahrzeug darstellt, und
- Erstellen des Fahrweges für das Fahrzeug durch die ECU auf der Grundlage des ausgewählten Abschnitts der dritten Datensequenz.

13. Steuerungssystem nach Anspruch 12, wobei der erste und der zweite Sensor ein LiDAR-Sensor ist.

14. Steuerungssystem einem der vorhergehenden Ansprüche 12-13, wobei die ECU einen ersten und einen zweiten Verarbeitungsabschnitt umfasst, wobei der erste Verarbeitungsabschnitt an Bord des Fahrzeugs angeordnet ist und der zweite Verarbeitungsabschnitt in einem außerhalb des Fahrzeugs angeordneten Remote-Server enthalten ist, wobei Korrelieren, Auswählen und Erstellen mindestens teilweise durch den zweiten Verarbeitungsabschnitt durchgeführt werden.

15. Fahrzeug umfassend ein Steuerungssystem nach einem der Ansprüche 12-14.

16. Computerprogrammprodukt, das ein nicht-transitorisches computerlesbares Medium umfasst, auf dem Computerprogrammmittel zum Betreiben eines Steuerungssystems gespeichert sind, das angepasst ist zur Erstellung eines Fahrweges für ein Fahrzeug, wobei das Steuerungssystem eine elektronische Steuereinheit (ECU) und einen ersten und einen zweiten seitlich zugewandten Sensor umfasst, die an dem Fahrzeug angeordnet sind, wobei der erste und der zweite Sensor ein nicht überlappendes Sichtfeld haben, wobei die ECU in Kommunikation mit dem ersten und dem zweiten Sensor angeordnet ist, wobei das Computerprogrammprodukt umfasst:
- Code zum Empfangen, an der ECU, einer ersten Datensequenz von dem ersten Sensor und einer entsprechenden zweiten Datensequenz von dem zweiten Sensor, wobei die erste und die zweite Datensequenz von den Sensoren als dreidimensionale (3D) Punktwolken angeordnet sind, die jeweils eine Darstellung einer linken und einer rechten Seite des Fahrzeugs bereitstellen, wobei das Computerprogrammprodukt **dadurch gekennzeichnet ist, dass** es ferner umfasst:
- Code zum Korrelieren der ersten und der zweiten Datensequenz durch die ECU, um eine dritte Datensequenz zu erstellen, wobei die dritte Datensequenz eine 3D-Darstellung eines Bereichs zwischen dem ersten und dem zweiten Sensor liefert,
- Code zum Auswählen eines Abschnitts der dritten Datensequenz durch die ECU, die einen durchfahrbaren Bereich für das Fahrzeug darstellt, und
- Code zum Erstellen eines Fahrweges für das Fahrzeug durch die ECU auf der Grundlage des ausgewählten Abschnitts der dritten Datensequenz.

## Revendications

1. Procédé mis en œuvre par ordinateur pour actionner un système de commande (200) pour former un parcours de déplacement (308) pour un véhicule (100, 102), le système de commande (200) comprenant une unité de commande électronique (ECU) (202) et un capteur tourné vers une première (204) et vers une seconde (206) faces disposé sur le véhicule (100), le premier et le second capteur (204, 206) ayant un champ visuel ne se chevauchant pas (208, 210), l'ECU (202) étant disposée en communication avec le premier et le second capteur (204, 206), le procédé comprenant les étapes suivantes :
- réception (S1), au niveau de l'ECU (202), d'une première séquence de données en provenance du premier capteur (204) et d'une deuxième séquence correspondante de données en provenance du second capteur (206), la première et la deuxième séquence de données en provenance des capteurs (204, 206) étant disposées sous forme de nuages ponctuels tridimensionnels (3D) créant respectivement une représentation d'une face gauche (L) et droite (R) du véhicule (100, 102), ce procédé étant **caractérisé en ce qu'**il comprend en outre les étapes suivantes :
- mise en corrélation (S2), par l'ECU (202), de la première et la deuxième séquence de données pour former une troisième séquence de données, la troisième séquence de données créant une représentation 3D d'une zone entre le premier et le second capteur (204, 206),
- sélection (S3), par l'ECU (202), d'une section de la troisième séquence de données représentant une zone pouvant être traversée (306) pour le véhicule (100, 102), et
- formation (S4), par l'ECU (202), du parcours de déplacement (308) pour le véhicule (100, 102) en se basant sur la section sélectionnée de la troisième séquence de données.

2. Procédé mis en œuvre par ordinateur selon la revendication 1, dans lequel le premier et le second capteur sont des capteurs LiDAR.

3. Procédé mis en œuvre par ordinateur selon une quelconque des revendications 1 et 2, dans lequel un centre de balayage pour le premier et le second capteur est perpendiculaire à un sens opérationnel normal pour le véhicule.

4. Procédé mis en œuvre par ordinateur selon une quelconque des revendications précédentes, dans lequel l'étape de mise en corrélation de la première et la seconde séquence de données comprend la réalisation d'une corrélation par paires entre des points de données dans la séquence de données respective.

5. Procédé mis en œuvre par ordinateur selon une quelconque des revendications précédentes, comprenant en outre l'étape de :
- filtrage, par l'ECU, de la troisième séquence de données pour éliminer des points de données périphériques.

6. Procédé mis en œuvre par ordinateur selon une quelconque des revendications précédentes, dans lequel la première et la seconde séquence de données représentent au moins une paroi d'une mine où le véhicule se déplace.

7. Procédé mis en œuvre par ordinateur selon une quelconque des revendications précédentes, dans lequel la zone pouvant être traversée est une zone de surface.

8. Procédé mis en œuvre par ordinateur selon la revendication 7, dans lequel la zone de surface coïncide avec un niveau du sol.

9. Procédé mis en œuvre par ordinateur selon une quelconque des revendications précédentes, dans lequel l'étape de mise en corrélation de la première et la seconde séquence de données comprend la comparaison d'une distance entre les points de données correspondants dans la première et la seconde séquence de données.

10. Procédé mis en œuvre par ordinateur selon l'une quelconque des revendications précédentes, comprenant en outre l'étape de :
- fonctionnement du véhicule en se basant sur le parcours de déplacement formé.

11. Procédé mis en œuvre par ordinateur selon une quelconque des revendications précédentes, dans lequel l'ECU comprend une première et une seconde section de traitement, la première section de traitement étant disposée à bord du véhicule et la seconde section de traitement étant englobée avec un serveur distant disposé hors du bord du véhicule, et le procédé comprenant en outre l'étape de :
- transmission de la première et la seconde séquence de données du véhicule à un serveur distant,
les étapes de mise en corrélation, sélection et formation étant au moins partiellement réalisées par la seconde section de traitement.

12. Système de commande apte à former un parcours de déplacement pour un véhicule, le système de commande comprenant une unité de commande électronique (ECU) et un capteur tourné vers une première et vers une seconde faces disposé sur le véhicule, le premier et le second capteur ayant un champ visuel ne se chevauchant pas, l'ECU étant disposée en communication avec le premier et le second capteur, l'ECU étant apte à :
- recevoir une première séquence de données en provenance du premier capteur et une deuxième séquence correspondante de données en provenance du second capteur, la première et la deuxième séquence de données en provenance des capteurs étant disposées sous forme de nuages ponctuels tridimensionnels (3D) créant respectivement une représentation d'une face gauche et droite du véhicule, ce système de commande étant **caractérisé en ce que** l'ECU est en outre apte à :
- corréler la première et la deuxième séquence de données pour former une troisième séquence de données, la troisième séquence de données créant une représentation 3D d'une zone entre le premier et le second capteur,
- sélectionner une section de la troisième séquence de données représentant une zone pouvant être traversée pour le véhicule, et
- former le parcours de déplacement pour le véhicule en se basant sur la section sélectionnée de la troisième séquence de données.

13. Système de commande selon la revendication 12, dans lequel le premier et le second capteur sont des capteurs LiDAR.

14. Système de commande selon l'une quelconque des revendications 12 à 13, dans lequel l'ECU comprend une première et une seconde section de traitement, la première section de traitement étant englobée avec un serveur distant disposé hors du bord du véhicule, la mise en corrélation, la sélection et la formation étant au moins partiellement réalisées par la seconde section de traitement.

15. Véhicule comprenant le système de commande selon l'une quelconque des revendications 12 à 14.

16. Lui de programmation informatique comprenant un support non transitoire lisible par ordinateur sur lequel sont sauvegardés des moyens de programmation informatique pour actionner un système de commande apte à former un parcours de déplacement pour un véhicule, le système de commande comprenant une unité de commande électronique (ECU) et un capteur tourné vers une première et vers une seconde faces disposé sur le véhicule, le premier et le second capteur ayant un champ visuel ne se chevauchant pas, l'ECU étant disposée en communication avec le premier et le second capteur, ce produit de programmation informatique comprenant :
- un code pour recevoir, au niveau de l'ECU, une première séquence de données en provenance du premier capteur et d'une deuxième séquence correspondante de données en provenance du second capteur, la première et la deuxième séquence de données en provenance des capteurs étant disposées sous forme de nuages ponctuels tridimensionnels (3D) créant respectivement une représentation d'une face gauche et droite du véhicule, ce produit de programmation informatique étant **caractérisé en ce qu'**il comprend en outre :
- un code pour mettre en corrélation, par l'ECU, la première et la deuxième séquence de données pour former une troisième séquence de données, la troisième séquence de données créant une représentation 3D d'une zone entre le premier et le second capteur,
- un code pour sélectionner, par l'ECU, une section de la troisième séquence de données représentant une zone pouvant être traversée pour le véhicule, et
- un code pour former, par l'ECU, un parcours de déplacement pour le véhicule en se basant sur la section sélectionnée de la troisième séquence de données.
